# EUROPEAN PATENT APPLICATION

(11) **EP 1 344 839 A1**
(43) Date of publication of application: **17.09.2003**
(21) Application number: 03445002.3
(22) Date of filing: 14.01.2003
(51) Int. Cl.: C22C 37/04, C21D 5/00

(54) **Alloyed nodular cast iron**

(30) Priority: 18.01.2002 SE 0200124
(71) Applicant: Ing.Firman Allan Persson HAB, SE-212 10 MALMO (SE)
(72) Inventor: Persson, Boo, 21620 Malmö (SE)
(74) Representative: Akerman, Marten Lennart

(57) **Abstract**

The invention relates to an alloyed nodular cast iron with good properties, especially good wear properties. The alloyed nodular cast iron comprising Cu, Mn, Mo and Fe, wherein the alloyed nodular cast iron has one or more surface(s) of at least 2 mm having a hardness value of 56 ± 2 HRc, which provides the material with very good abrasion resistance. The invention also relates a process for the manufacture of said alloyed nodular cast iron, as well as tools and construction components produced from the alloyed nodular cast iron, such as tools and construction components used within the vehicle industry.

## Description

### TECHNICAL FIELD

The invention relates to an alloyed nodular cast iron with good properties, especially good wear properties. The alloyed nodular cast iron comprising Cu, Mn, Mo and Fe, wherein the alloyed nodular cast iron has one or more surface(s) of at least 2 mm having a hardness value of 56 ± 2 HRc, which provides the material with very good abrasion resistance. The invention also relates to a process for the manufacture of said alloyed nodular cast iron, as well as tools and construction components produced from the alloyed nodular cast iron, such as tools and construction components used within the automobile industry.

### BACKGROUND

Steel is the favoured material used today for the manufacture of equipment and machine components meant to withstand high stresses. However, steel is expensive to manufacture, and alternatives to steel are continuously sought after.

JP50010809 describes a crank shaft prepared by casting a cast iron consisting of 3.0-3.8 % C, 1.7-2.8 % Si, 0.2-0.8 % Mn, 0.03-0.08 % Mg, 0.3-1.0 % Cu, 0.2-1.0 % Mo and the balance Fe, having a hardness of 350-450 Hv. The crank shaft is heated by high frequency current or flame and cooled naturally.
Nodular cast iron is one type of material that is used as an alternative to steel. One problem with earlier known forms of nodular cast iron is that they often showed insufficient durability. There is thus a need for a durable and abrasion resistant nodular cast iron material, i.e., having a hardness of at least above 50 HRc, which could be produced at lower manufacturing costs and thereby replace the expensive steel.

### SUMMARY OF THE INVENTION

The present invention relates to an alloyed nodular cast iron for use in the manufacture of equipment, machine components and other suitable objects, wherein the material exhibits good durability and wear properties, and which can additionally be manufactured at acceptable costs. Additionally, the invention provides a material having good wear resistance, especially good abrasion resistance, being heat-treatable and weldable. According to one embodiment the invention relates to an alloyed nodular cast iron comprising Cu, Mn, Mo and Fe, wherein the alloyed nodular cast iron has one or more surface(s) of at least 2 mm having a hardness value of 56 ± 2 HRc.

According to another embodiment the invention relates to a process for the manufacture of an alloyed nodular cast iron according to any of the preceding claims, wherein the process comprises the steps of; providing crude iron, preparing a tool-bed, melting of the crude iron, casting, processing and hardening using flame, induction or laser hardening processes.

The invention also provides tools and construction components comprising the alloyed nodular cast iron. By providing such an alloyed nodular cast iron, the market obtain a nodular cast iron having the characteristics of steel, which enables the possibility to produce tools an construction components with an increased abrasion resistance compared to the nodular cast irons available today. The tools and construction components can be used where there is a requirement for a high surface hardness. The material possesses good machine ability and relatively high tensile strength. The materiel can be used for press tools within the automotive industries and for other applications as for, i.e cylinder lining, valve seat and camshafts.

### DETAILED DESCRIPTION OF THE INVENTION

The present invention relates to an alloyed nodular cast iron, which, besides iron (Fe), comprises copper (Cu), manganese (Mn) and molybdenum (Mo). Through the use of the correct balance of Cu, Mn and Mo, the resulting material is able to achieve a high abrasion resistance.
According to one embodiment, the invention relates to an alloyed nodular cast iron comprising Cu, Mn, Mo and Fe, wherein the alloyed nodular cast iron has one or more surface(s) of at least 2 mm having a hardness value of 56 ± 2 HRc. Additionally the alloyed nodular cast iron may have a core having a hardness value below 300 HB, such as between 220-280 HB or 240-280 HB. The nodular cast iron may also include trace amounts of phosphorus (P), chromium (Cr), sulphur S) and nickel (Ni). However, the content of Cr and Ni should generally be as low as possible.
According to another embodiment, the invention relates to an alloyed nodular cast iron as described above in which beside the above mentioned components the alloy also comprises carbon (C), silicon (Si) and magnesium (Mg). The alloyed nodular cast iron comprises 3.40-3.65 % (wt/total wt) C, 2.20-2.65 (wt/total wt) Si, 0.40-0.60 % (wt/total wt) Mn, 0.03-0.05 % (wt/total wt) P, ≤ 0.01 % (wt/total wt) S, 0.25-0.45 % (wt/total wt) Mo, 0.040-0.060 (wt/total wt) Mg and 0.80-1.00 % (wt/total wt) Cu.
According to a third embodiment the invention relates to an alloyed nodular cast iron as described above which additionally comprises nickel (Ni). The alloyed nodular cast iron comprises 3.58 % (wt/total wt) C, 2.41 (wt/total wt) Si, 0.516 % (wt/total wt) Mn, 0.047 % (wt/total wt) P, 0.011 % (wt/total wt) S, 0.064 Ni % (wt/total wt), 0.26 % (wt/total wt) Mo, 0.046 (wt/total wt) Mg and 0.86 % (wt/total wt) Cu.

In the example below, a preferred composition of the nodular cast iron according to the invention is given.

According to the invention, the nodular cast iron is preferably produced via a moulding process, which is a well, documented technique. The nodular cast iron is then processed prior to being subjected to a hardening/tempering process. Suitable hardening methods may include flame hardening, induction hardening and laser hardening, or a combination of one or more of these methods. One example is induction hardening in which the casting may be induction hardened using a Minac 21 KW 15Khz machine with a scanning line inductor with Fluxtrol concentrator. Such a machine together with the above mentioned material can produce a hardened layer with a scanning speed of 2mm/sek. The hardening temperature is suitably 850-950 °C, for example 870-900 °C, followed by a cooling process, utilising as cooling medium, water, or a mixture of water and oil, such as a water-soluble polymer. The consecutive heating and cooling processes cause a microstructural change in the nodular cast iron from austenite to martensite, from the surface and several millimeters, for eg., 2-4 mm, down into the surface, and a hardness value of approximately 54-58 HRc, such as, 56-57 HRc is achieved. This result in a new product having a harder surface than already known products. Other properties for this new product include the core having a perlitic microstructure, suitably at least 95% perlitic microstructure, with an accompanying hardness value of ca. 220-280 HB, suitably, ca. 240-280 HB. The above mentioned process provides a unique alloyed nodular cast iron with increased abrasion resistance as compared to known products.
According to the invention, the hardened nodular cast iron can be used in all areas and all applications, and especially where high values of durability and abrasion resistance play a significant role. Examples of use areas include the automobile industry, the packaging industry, the mechanical tooling industry, and the locomotive industry. The hardened nodular cast iron may be used to produce tools, for eg., presses for the car industry, machine components, such as vehicle and train wheels, cylinder liners, camshafts for motors, car components, and so forth. The nodular cast iron may even be used in other applications, but is especially suitable for applications where high abrasion resistance is vital.
The alloyed nodular cast iron according to the invention possesses very good durability and wear properties. It is, for eg., possible to subject the nodular cast iron to flame and induction hardening processes up to a value of Rockwell 57-58 HRc.
Among the components, the elements Mn, Mo and Cu have special relevance for the wear properties.

The above mentioned alloyed nodular cast iron can easily be welded having similar characteristics as for steel castings. The welding may be performed using both temperable and non-temperable alloyed nodular cast iron.

Additionally the alloyed nodular cast iron can be coated by Physical Vapour Deposition using for example Tinol one of the most common coatings. This coating in combination with the above mentioned material provides a material having excellent waer resistance, reduces friction and resists corrosion.

### EXAMPLE

### EXAMPLE 1

### Production of an alloyed nodular cast iron

An alloyed nodular cast iron is produced from crude iron using a moulding process described as follows. A tool bed is first produced using hand moulding. The melting process is performed in an induction oven at about 1540°C. The moulding process is performed using conventional techniques, including, for eg., a constitutional diagram for iron and carbon. A chemical analysis of the resulting nodular cast iron gave the following results:

| Component | Content in wt.% of total weight |
|---|---|
| C | 3.58 |
| Si | 2.41 |
| Mn | 0.516 |
| P | 0.047 |
| S | 0.010 |
| Ni | 0.064 |
| Cr | 0.044 |
| Mo | 0.26 |
| Mg | 0.046 |
| Cu | 0.86 |
| Fe | To 100 % |

The nodular cast iron was found to have the following mechanical properties, where the mechanical properties were measured using a test bar with a diameter of 14.25 mm² and a surface of 159.4 mm².
Tensile strength R_{p0,2} = 713 N/mm² at a load of 113,7 kN.
Ultimate breaking strength Rₘ= 920 N/mm² at a load of 146,6 kN.
Elongation A 5% = 4.

The resulting nodular cast iron was processed prior to being subjected to an induction hardening using a Minac 21 KW 15Khz machine with a scanning line inductor with Fluxtrol concentrator where the surface of the nodular cast iron was warmed up to 900 °C. After the warming process, the body/bulk of nodular cast iron was cooled in water. The microstructure in the nodular cast iron was transformed from austenite to martensite, from the surface and about 2 mm downwards into the bulk of the material, resulting in a hardness value of 57 ± 1. The rest of the material had a hardness value of ca. 240-280 HB.

### EXAMPLE 2

### Welding test

The alloyed nodular cast iron produced in example 1 was used in welding either without heat treatment or with heat treatment.

### Without heat treatment.

The entire welding test was carried out without any preheat. The alloyed nodular cast iron was easy to weld with similar characteristics as for steel castings.

### MMA welding.

Grinded joint use Castolin 2230 XHD φ 3,2
Welding use Castolin 2230 XHD φ 3,2,Castolin 2-44 φ 3,2
or Castolin 2222 φ 3,2.

### TIG welding

Use Castolin 45656 φ 1,6

### With heat treatment

### Metal arc welding

The area to be welded was preheated to 350°C. The preheated area should be some 100-150 mm bigger than the area to be repaired. A buffer layer was deposited using ESAB welding rod Type OK 68.82 followed by ESAB§ welding rod Type 84.52 for the final pass. The casting was allowed to cool slowly to ambient temperature.

### TIG Welding

Use Calmax/Carmo Tigweld charge nr DV43146
Diameter = 1.6 Uddeholm ASSA AB

## Claims

1. An alloyed nodular cast iron comprising Cu, Mn, Mo and Fe, wherein the alloyed nodular cast iron has one or more surface(s) of at least 2 mm having a hardness value of 56 ± 2 HRc.

2. The alloyed nodular cast iron according to claim 1, wherein the alloyed nodular cast iron consists of a core having a hardness value below 300 HB.

3. The alloyed nodular cast iron according to any of the preceding claims, wherein the alloyed nodular cast iron comprises C, Si, Mn, P, S, Mo, Mg and Cu.

4. The alloyed nodular cast iron according to any of the preceding claims, wherein the alloyed nodular cast iron comprises 3.40-3.65 % (wt/total wt) C, 2.20-2.65 (wt/total wt) Si, 0.40-0.60 % (wt/total wt) Mn, 0.03-0.05 % (wt/total wt) P, ≥ 0.01 % (wt/total wt) S, 0.25-0.45 % (wt/total wt) Mo, 0.04.0.06 (wt/total wt) Mg and 0.80-1.00 % (wt/total wt) Cu.

5. The alloyed nodular cast iron according to claim 4, wherein the alloyed nodular cast iron comprises 3.58 % (wt/total wt) C, 2.41 (wt/total wt) Si, 0.516 % (wt/total wt) Mn, 0.047 % (wt/total wt) P, ≥ 0.01 % (wt/total wt) S, 0.064 Ni % (wt/total wt), 0.26 % (wt/total wt) Mo, 0.046 (wt/total wt) Mg and 0.86 % (wt/total wt) Cu.

6. A process for the manufacture of an alloyed nodular cast iron according to any of the preceding claims, wherein the process comprises the steps of;
a) providing crude iron,
b) preparing a tool-bed,
c) melting of the crude iron,
d) casting, processing and
e) hardening using flame, induction or laser hardening processes.

7. The process according to claim 6, wherein e) is performed by induction at 870-900 °C followed by quenching in a water-soluble polymer.

8. Tools comprising the alloyed nodular cast iron according to any of the preceding claims.

9. Construction components comprising the alloyed nodular cast iron according to any of the preceding claims.

10. Tools and construction components according to claim 8-9, wherein the tools and construction components are coated with PVD coatings.
